# EUROPEAN PATENT SPECIFICATION

(11) **EP 3 393 256 B1**
(45) Date of publication and mention of the grant of the patent: **24.07.2024**
(21) Application number: 16831577.8
(22) Date of filing: 19.12.2016
(51) Int. Cl.: A23C 7/04, A23C 9/14, A23C 9/15, A23C 3/03, A23C 13/14, A23C 19/09

(54) **PROCESSES FOR MAKING MILK AND MILK-RELATED PRODUCTS**
VERFAHREN ZUR HERSTELLUNG VON MILCH UND MILCHPRODUKTEN
PROCÉDÉS DE FABRICATION DE PRODUITS LAITIERS ET DÉRIVÉS DE LAIT

(30) Priority: 21.12.2015 GB 201522536
(43) Date of publication of application: 31.10.2018
(73) Proprietor: Arla Foods Limited, Leeds LS10 1AB (GB); Arla Foods Amba, 8260 Viby J (DK)
(72) Inventor: MIKKELSEN, Karina, Leeds LS10 1AB (GB); HAYES, Simon Peter, Leeds LS10 1AB (GB); ANDERSEN, Ulf, 8260 Viby (DK)
(74) Representative: Potter Clarkson
(86) International application number: PCT/GB2016/053983
(87) International publication number: WO 2017/109466

(56) References cited:
- DE-A1- 19 955 178
- IE-B1- 63 040
- US-A- 3 525 629
- US-A- 5 143 741
- US-A1- 2014 308 417

## Description

The present invention relates to processes for making milk protein concentrates and milk products therefrom, especially milk products having unexpected and desirable nutritional and sensory properties such as taste and colour.

It is known to extend the shelf-life of raw milk, i.e. delay spoilage, by subjecting the milk to heat treatment to inactivate undesirable enzymes and destroy pathogenic and spoilage microorganisms. The three general types of heat treatment (from mild to severe) are thermization, pasteurisation, and sterilization. Thermization is a mild heat treatment (typically 57-68 degrees C for 15 sec) sufficient to destroy gram-negative psychotropic vegetative microorganisms and increase the refrigerated shelf life. Pasteurisation (typically 72 degrees C for 15 sec) destroys most of the vegetative pathogenic organisms (bacteria, yeasts, and moulds), which may cause food poisoning. Sterilization is the most severe heat treatment (typically 121 degrees C for 3 min) and destroys all microorganisms (vegetative and spores) or renders them incapable of further growth.

To extend the shelf life of milk at ambient temperature beyond several days, it must be heated to higher temperatures than during pasteurisation and post processing contamination must be eliminated. Temperatures in excess of 100 degrees C are required, however this may cause undesirable changes in the milk: decreased pH, calcium precipitation, protein denaturation, Maillard browning, and modification of casein; these changes are important and affect the sensory characteristics, nutritional value, susceptibility to foul heat exchangers, and sediment formation.

It is also known to physically remove micro-organisms from raw milk in order to extend its shelf-life. For example, US Patent Application Publication No US 2012/0015082 A1 discloses that physical separation of more than 90% of microorganisms from milk can be effected by subjecting raw milk to centrifugal separation or bactofugation and/or microfiltration. Such removal of microorganisms leaves a partly-sterilised milk derivative which is then subjected to high temperature treatment in the range of from 140-180°C for up to 200 milliseconds before final cooling. US 2012/0015082 A1 mentions that the milk product obtained by the described methods has a reduced "cooked taste", that is, it tastes "fresher" than comparable known milk products produced by methods involving exposure to high temperature treatments but without prior removal of microorganisms. Hence, US 2012/0015082 A1 associates improved taste of milk products with microorganism removal. US 3,525,629 discloses ultracentrifugation of milk to remove bacteria, pasteurisation of the resulting bacterial sludge and adding back to the milk from which the bacteria had been removed, in order to restore protein content. However, the microorganism-rich slurry produced as a by-product of bactofugation of milk is typically regarded as a waste product.

Various attempts have been made to improve the taste of milk products by adding proteinrich milk fractions. EP 0 345 226 describes a concentrate of non-aggregated casein micelles, which is prepared by ultrafiltering skimmed milk to reduce its volume at least four times. EP 1 563 741 describes that the addition of micellar casein can improve mouthfeel and flavour of a skimmed milk product, but a significant improvement is only observed in combination with a viscosity-increasing agent, such as starch, carrageen, agar or gelatin. It may be that casein micelles are not particularly good flavour improvers or fat substitutes because they have a diameter of from about 0.1 to about 0.4 µm, which is smaller than that of milk fat droplets. In addition, US 2,744,891 discloses a soluble casein concentrate which, when added to skimmed milk, does not change its character. US 3,503,752 discloses a milk protein concentrate prepared by gel filtration and evaporation of milk, which is added to whole milk and/or skimmed milk to make a protein-enriched milk which retains the flavour properties of the starting milk.

Ultrafiltering large volumes of milk to produce casein micelles as in EP 0 345 226 or EP 1 563 741 is potentially time-consuming and costly and therefore not particularly wellsuited to commercial scale. The milk permeate, produced as a by-product of ultrafiltration, may be difficult to use in other commercial processes, resulting in wastage and disposal costs. In addition, casein micelles produced by ultrafiltration may be subject to spoilage upon storage due to microbiological contamination.

### Summary of the invention

It is a general object of the invention to provide processes for making a milk protein concentrate and uses of the same to make protein enriched milk products having desirable nutritional and/or sensory properties. In particular, it is an object of the invention to provide an extended shelf-life milk product and processes for making the same, wherein the milk product has one or more sensory properties similar to those of semi-skimmed milk, but has a lower fat content and/or higher protein content than semi-skimmed milk.

In a first aspect, there is provided a process for making a milk product having a protein content higher than 3.5% v/v comprising:
(i) providing skimmed milk from the separation of raw milk;
(ii) subjecting the skimmed milk to centrifugal separation to obtain centrifugate which contains micro-organisms;
(iii) subjecting the centrifugate to heat treatment above 100° centigrade, and cooling to obtain a milk protein concentrate;
(iv) providing skimmed milk; and
(v) mixing the milk protein concentrate with the skimmed milk to obtain a protein enriched milk product having a protein content higher than 3.5% v/v.

By "protein enriched" is meant having a higher protein content than semi-skimmed milk. Known semi-skimmed milks have a protein content of 3.0-3.5% v/v. Skimmed milk typically exhibits the same range of protein content as semi-skimmed milk. The skimmed milk provided in step (i) may therefore have a protein content of 3.0-3.5% v/v. The skimmed milk provided in step (iv) may be the skimmed milk product of the centrifugal separation of step (ii). Centrifugal separation enriches milk proteins in the centrifugate fraction, resulting in protein depletion in the skimmed milk fraction. Therefore, in order to produce a milk product having a protein content higher than 3.5% v/v from such a skimmed milk fraction, it is necessary to add milk protein concentrate at a higher proportion than is produced from the original volume of skimmed milk. Alternatively, milk protein concentrate may be added to a skimmed milk that has not been subjected to a centrifugal separation as in step (ii).

Centrifugal separation is the separation of microorganisms, i.e. bacteria and spores, based on their higher density than other components of skimmed milk.

Preferably, the centrifugal separation of skimmed milk to obtain a centrifugate fraction which contains microorganisms is achieved by bactofugation using a bactofuge, which is a milk separation device specialised for the removal of microorganisms, i.e. bacteria and spores based on their higher density than other components of milk (density of skimmed milk is 1.036 g/cm³ vs density of bacteria/spores 1.07-1.13 g/cm³).

The microorganism-containing fraction from a bactofuge is a sludge-like material known as "bactofugate".

Hence, preferably step (ii) of the process of the invention involves bactofugation of the skimmed milk with a bactofuge to obtain bactofugate.

Preferably the protein content of the centrifugate or bactofugate is standardised before high heat treatment to from 6 to 10 v/v%, such as from 6.5 to 9.5 v/v%, preferably from 6.9 to 9.5v/v%.

Preferably the milk protein concentrate and skimmed milk are mixed to obtain a protein supplemented milk preparation having a protein content of from 4 to 5 v/v %, and preferably 4.2 to 4.8 v/v %. A protein enriched milk product have 4.5 v/v% protein is calculated to contain 4.69 w/v% protein, based on the relative densities of the components of milk, as derived from Anton Paar's MEP DMA 35 Dairy manual; or McCance and Widdowson's The Composition of Foods, Sixth summary edition, (Food Standards Agency (2002) Cambridge: Royal Society of Chemistry).

Preferably the milk product has a fat content of less than 0.5 v/v%.

Preferably the milk protein concentrate comprises from 15 to 35 v/v%, such as 19-31 v/v%, preferably 20 v/v% of the milk product.

Preferably, the high heat treatment involves heating to above 100° centigrade, especially from 118° centigrade to 135° centigrade for 4 to 20 seconds.

Preferably the milk protein concentrate is cooled to less than 8° centigrade before mixing with the skimmed milk. Cooling to less than 8 °C allows the milk protein concentrate to be stored before mixing with the skimmed milk. At temperatures above 8 °C, there is a risk that spores not eradicated by the high heat treatment might germinate, causing spoilage. In practice, storage of the milk protein concentrate is typically required during commercial production in order to accumulate sufficient quantity to produce a protein enriched milk product at commercial scale.

It is preferred that the skimmed milk in step (iv) is microfiltered and/or pasteurised before mixing with the milk protein concentrate. Suitably, the skimmed milk is microfiltered and pasteurised. If the skimmed milk has already been subjected to centrifugal separation, such as bactofugation, microfiltration may not be required.

By "pasteurisation" we include the meaning of heating a composition such that all of the composition is held at a temperature of at least 63 °C for at least 30 minutes; or at least 72 °C for at least 15 seconds, as specified in Grade "A" Pasteurized Milk Ordinance., U.S. Dept of Health and Human Services, Public Health Service, Food and Drug Administration, 2009. "Pasteurisation" also includes any other process approved as equivalent by public health authorities, such as the FDA. For example, pasteurisation may be performed by heating at 74 °C for 25 seconds.

The skimmed milk may be combined with a little cream, and is still regarded as skimmed milk if its fat content is less than 0.5 v/v%. Any added cream may be subjected to a high temperature treatment at a temperature of at least 110 °C to ensure microbiological safety. The skimmed milk may be homogenised after addition of cream. In homogenisation, a flow of liquid is pumped through a valve assembly under high pressure, causing an increase in flow velocity as the liquid passes through the valve, and during which milk fat globules are disrupted. A one-stage or a two-stage homogeniser may be used. Milk is typically homogenised at a temperature above the melting point of fats (45 °C), such as at 60 °C. A typical pressure is 5 MPa or greater. A typical pressure for a one stage or first stage homogenisation may be about 15 MPa. If a second stage homogenisation is used, this may be at a reduced pressure, such as 5 MPa. Suitable homogenisers are Tetra Pak Tetra Alex, GEA Niro Soavi or SPX APV Rannie.

The microfiltering and/or pasteurisation of the skimmed milk to be mixed with the milk protein concentrate results in a product having an extended shelf-life compared to the shelf-life of a product made with skimmed milk that has not been subjected to microfiltration and/or pasteurisation. "Shelf-life" means the time in which the milk product can be stored, hermetically sealed, at a specific temperature before spoilage occurs due to growth of microorganisms. A typical extended shelf-life of the product when stored at less than 8 °C may be a minimum of 10 days, such as a minimum of 15 days, a minimum of 20 days, or a minimum of 25 days. A product is considered to be within its shelf-life if the total viable counts (tvc), measured as colony forming units (cfu)/mL according to ISO 4833:2003, is <100 cfu/mL. Thus, a product may have a tvc <100 cfu/mL for the first 10 days after production, such as for the first 15 days after production, for the first 20 days, or for the first 25 days after production. An exemplary product has a tvc <100 cfu/mL for at least 28 days after production (day of packing).

ISO 4833:2003 specifies a horizontal method for the enumeration of microorganisms, by counting the colonies growing in a solid medium after aerobic incubation at 30 °C. In essence, two poured plates are prepared using a specified culture medium and a specified quantity of the test liquid. Other pairs of poured plates are prepared, under the same conditions, using decimal dilutions of the test liquid. The plates are aerobically incubated at 30 °C for 72 hours. The number of microorganisms per millilitre of sample is calculated from the number of colonies obtained on selected plates. Thus, microorganisms may be enumerated according to ISO 4833:2003. Alternatively, the method of ISO 4833:2003 may be altered by altering the duration and/or temperature of aerobic incubation. For example, the aerobic incubation may be performed at between 21 °C and 37 °C, for between 72 hours and five days. At lower temperatures, a longer incubation may be required. For example at 21 °C, the incubation may be performed for five days.

In another aspect, the invention provides a milk product having a protein content higher than 3.5% v/v obtainable by a process according to the first aspect, wherein:
a) the milk product has a greater casein : whey protein ratio than skimmed milk and/or semi-skimmed milk; optionally wherein the casein : whey protein ratio of the milk product is approx. 9 and preferably 9.4; optionally wherein the casein : whey protein ratio refers to the ratio of (αs1-casein + β-casein) : whey protein; and/or
b) the milk product comprises protein particle aggregates identifiable by confocal microscopy using Flourescein isothiocyanate as a protein staining agent, which aggregates are absent from skimmed and/or semi-skimmed milk, optionally wherein the protein particle aggregates identifiable by confocal microscopy have an average particle diameter of 0.5 micrometer or more, preferably 0.5 to 2 micrometers, and most preferably approx. 1 micrometer.

In an embodiment, the milk product has one or more sensory properties which is more similar to semi-skimmed milk than skimmed milk; wherein the sensory properties are selected from one or more of aroma; flavour; texture (mouthfeel); after-taste; after-feel; and colour, as determined by tristimulus spectroscopy colour measurement. Sensory testing may be performed according to ISO 22935-1:2009, ISO 22935-2:2009 and ISO 22935-3:2009, which relate to sensory analysis of milk and milk products.

In another aspect, the invention provides use of a milk protein concentrate (a): as an ingredient in a dairy food or drink product to improve one or more sensory properties of the dairy product, optionally wherein the sensory property is selected from one or more of aroma, flavour, texture (mouthfeel), after-taste, after-feel, and colour, optionally wherein the dairy food or drink product is selected from milk, cream, or cheese; or (b) as an ingredient in a food or drink product to mimic one or more sensory properties of a fat;
wherein the milk protein concentrate is obtainable by a process involving the centrifugal separation of skimmed milk from the separation of raw milk to obtain a centrifugate containing micro-organisms; and subjecting the centrifugate to heat treatment above 100° centigrade, and cooling to obtain the milk protein concentrate, wherein the cooling is cooling to less than 8° C.

The milk protein concentrate to be used as in this aspect may be made by a process comprising:
(i) providing skimmed milk from the separation of raw milk;
(ii) subjecting the skimmed milk to centrifugal separation to obtain centrifugate which contains micro-organisms; and
(iii) subjecting the centrifugate to heat treatment above 100° centigrade, and cooling to obtain a milk protein concentrate, wherein the cooling is to a temperature of less than 8 °C.

Other features of the process may be as described in relation to the first aspect.

The use of the milk protein concentrate as an ingredient in a dairy food or drink product, may especially be in a liquid food or drink product. Examples include milk, cream, or cheese. Cheese can be produced from ingredient milk as described in http://milkfacts.info/Milk%20Processing/Cheese%20Production.htm; or TetraPak's online dairy processing handbook, chapter 14: "Cheese": http://www.dairyprocessinghandbook.com/chapter/cheese; 2003 (ISBN 91-631-3427-6).

In a preferred aspect the use of a milk protein concentrate in a dairy food or drink product improves one or more sensory properties of the dairy product. These may be selected from one or more of aroma, flavour, texture (mouthfeel), after-taste, after-feel, and colour.

In a preferred aspect the use of a protein concentrate as an ingredient in a food or drink product has the effect of mimicking one or more sensory properties of a fat.

Additional objects and advantages of the invention are described below.

As used herein, the term "milk" is also intended to encompass milks from animal and plant sources. Animal sources of milk include, but are not limited to, human, cow, sheep, goat, buffalo, camel, llama and deer. In a preferred embodiment of the invention, the milk comprises bovine milk. Plant sources of milk include, but are not limited to, milk extracted from soybean.

The method of the invention may preferably be used for treating fresh milk, i.e. milk which has recently been milked from the source of the milk derivative, eg from cows. For example, it may be preferred that the milk is at most 48 hours old, i.e. at most 48 hours since milking, and more preferably at most 36 hours old, such as at most 24 hours old.

It is preferred that the milk is of good quality and normally the milk comprises at most 100,000 colony forming units (cfu)/mL, preferably at most 50,000 cfu/mL, and even more preferably at most 25,000 cfu/ml. It may even be preferred that the milk derivative comprises at most 10,000 cfu/mL, such as at most 7,500 cfu/mL.

In the context of the present invention, when a composition is said to comprise, contain or have X% (v/v) of a specified component, the volume percentage of the specified component is calculated relative to the total volume of the composition unless it is stated otherwise.

"Skimmed" milk generally refers to milk having less than 0.1% v/v fat and such milk may be obtained by removal of the cream fraction from raw or "whole" milk.

"Semi-skimmed" milk generally has a fat content of approx. 1.5% v/v.

"Raw" or "whole" milk generally has a fat content of approx. 3.5% v/v or more.

The milk products of the invention may comprise one or more additives. For example, the one or more additives may contain a flavouring, such as strawberry, chocolate, banana, mango, and/or vanilla.

Alternatively, or in addition, the one or more additives may contain one or more vitamins. Useful vitamins are eg vitamin A and/or vitamin D. Other vitamins such as vitamin B, C, and/or E may also be useful.

Alternatively, or in addition, the one or more additives may also contain one or more minerals. An example of a useful mineral is the milk mineral supplement Capolac MM-0525 (Arla Foods Ingredients Amba, Denmark).

In the context of the present invention, the term "microorganisms" relates to eg bacteria and bacterial spores, yeasts, moulds and fungal spores.

The centrifugal separation or bactofugation step may remove at least 90% of the microorganisms of the milk derivative, preferably at least 95% of the microorganisms, and even more preferably at least 99% of the microorganisms of the skimmed milk.

Suitable bactofuges can eg be found in Tetra Pak Dairy processing Handbook 2003 (ISBN 91-631-3427-6) which is incorporated herein by reference for all purposes.

Supplier of bactofuge: TetraPak UK. Other main supplier of bactofuges is Westfalia Bactofuge model: Tetra Centri BM 618HGV Operating conditions: temperature 50-60°C, 35-40 m3/hrs, discharge frequency every 5 minutes.

Supplier of heating system: TetraPak UK. Other main supplier of dairy heating systems: GEA, SPX, Krones Heating systems: dual tubular indirect heating and cooling, variable flow speed 400-1, 800 Itr/hr, preheat 80-90°C/1 minute (protein stabilisation), followed by high heat to 120-130°C for 8-30 seconds, cooling to <5°C.

In an embodiment of the invention, the skimmed milk of step iv) is microfiltered.

In a preferred embodiment of the invention, the microfiltration is performed using a filter having a pore size in the range of 0.5-1.5 micron, preferably in the range of 0.6-1.4 micron, even more preferably in the range of 0.8-1.2 micron.

In an embodiment of the invention, the used microfilter is a cross-flow microfilter. Suitable microfiltration system can eg be found in Tetra Pak Dairy processing Handbook 2003 (ISBN 91-631-3427-6) which is incorporated herein by reference for all purposes.

The physical separation of raw milk into a skimmed milk fraction and a cream fraction is preferably performed at, below, or slightly above ambient temperature. Thus, the temperature of the milk derivative may be at most 60 degrees C during the physical separation, eg at most 40 degrees C, such as at most 20 degrees C, or at most 10 degrees C.

Step (iii) of the process involves exposing the bactofugate to a High Temperature (HT)-treatment. The HT-treatment of step (iii) involves heating the composition to a temperature in the range of 140-180 degrees C, preferably 145-170 degrees C, and even more preferably 150-160 degrees C.

The heating of the HT-treatment should rapidly increase the temperature of the centrifugate or bactofugate. Such rapid temperature increases may be accomplished by contacting the centrifugate or bactofugate with steam. Thus, in a preferred embodiment of the invention, the heating of the HT-treatment is performed by contacting the centrifugate or bactofugate with steam. There are different techniques available for contacting the centrifugate or bactofugate with steam. One of these is direct steam injection which steam is injected into the liquid to be heated. Another technique is steam infusion wherein the liquid is infused into a steam-filled chamber.

The temperature of the steam is typically somewhat higher than the desired treatment temperate of the HT-treatment, for example at most 10 degrees C higher than the desired treatment temperate of the HT-treatment, preferably at most 5 degrees C higher, an even more preferred at most 3 degrees C higher.

For example, the heating of the HT-treatment may comprise contacting the centrifugate or bactofugate with steam, and it should be noted that other energy sources may contribute to the heating as well.

In an embodiment of the invention, the heating of the HT-treatment comprises, or consists of, exposing the first composition to electromagnetic energy. Examples of useful electromagnetic energy are IR radiation and/or microwave radiation.

Bactofuges or centrifuges may discharge either continuously, or periodically in batches. Where batches of bactofugate or centrifugate are discharged on a periodic basis, it is preferred that the discharge frequency is sufficient to permit the HT-treatment to destroy enzymatic activity before excessive proteolysis and/or effects on sensory profile has occurred. For example, a discharge frequency of less than every 30 minutes, such as every 5 minutes, is suitable. A preferred discharge frequency is every 13 minutes. Proteolysis of the milk protein concentrate may be assessed by peptide mapping, for example by chromatographic separation of peptides and relative quantification by UV absorbance at 214 nm, as described in Rauh, V. M., et al. (2014). "Plasmin activity as a possible cause for age gelation in UHT milk produced by direct steam infusion." International Dairy Journal 38(2): 199-207.

The heated centrifugate or bactofugate should be cooled rapidly as part of the process, and in a preferred embodiment of the invention, the cooling of the HT treatment comprises, or consists of, flash cooling.

In the context of the present invention, the term "flash cooling" is the cooling obtained by introducing, eg spraying, a hot liquid or aerosol into a vacuum chamber, whereby parts of the liquid evaporates and rapidly cools the remaining liquid.

Examples of useful HT-treatment systems are eg the Saniheat^{™}-system Gea Niro (Denmark), the Linient Steam Injection (LSI^{™})-system of Gea Niro (Denmark) or the Instant Infusion System (IIS) of Invensys APV (Denmark).

Example for useful HT-treatment systems are eg found in the international patent applications WO 2006/123,047 A1 and WO 98/07,328, which both are incorporated herein by reference for all purposes.

General aspects of high temperature treatment are eg found in "Thermal technologies in food processing" ISBN 185573558 X, which is incorporated herein by reference for all purposes.

In a preferred embodiment of the invention, the process involves a further packaging step in which the milk product is packaged into a container. Preferably, the milk product is packaged under aseptic conditions. For example, the aseptic packaging may be performed by using an aseptic filling system, and it preferably involves filling the milk into one or more aseptic container(s). Examples of useful containers include glass or plastic bottles, plastic or waxed paper cartons, and/or plastic bags.

Hence, another aspect of the invention relates to a packaged milk product, obtainable by any of the processes or methods as described herein.

Preferably, in the packaged milk product of the invention there is a fixed amount of milk product.

For example, milk products may be packaged in a fixed amount of 1 pint (568 ml) or a multiple thereof, especially 2 pints (1.136 litres) or 4 pints (2.273 litres).

Milk products of the invention may also be packaged in a fixed amount of a quart (0.94 litres), half-gallon (1.89 litres), gallon (3.78 litres) or multiples thereof.

Milk products may also be packaged in a fixed amount of from 100 ml to 6 litres, preferably 180 ml, 200 ml, 500 ml, 900 ml, 1 litre, 1.8 litres, 2 litres, 2.3 litres or 3 litres.

### Brief description of the Figures

Fig 1 is a schematic diagram showing a most preferred process of the invention, starting from raw milk, through separation to obtain a skimmed milk fraction that is subjected to bactofugation and high heat treatment to obtain a milk protein concentrate (MPC) that is then mixed with microfiltered and pasteurized skimmed milk to produce a final milk product having a protein content of 4.2 to 4.5% v/v and a fat content of less than 0.5% v/v.
Fig 2 (a) and (b) confocal micrograph image aggregates showing small protein particle complexes which are not found in either skimmed or semi-skimmed milk and have sizes similar to those of fat droplets seen in micrographs of skimmed and semi-skimmed milk. Figure 2(b) is a magnification of a part of the image shown in UK patent application No. 1522536.0, from which the present application claims priority.
Fig 3(a) typical particle size distributions for whole (full-fat) milk, semi-skimmed milk and skimmed milk.
Fig 3(b) particle size distribution for a milk product of the invention.
   The inventors have found that the overall particle size distribution for a milk product of Example 1 is very comparable with that of semi-skimmed milk. A key feature of the milk product of the invention appears to be the presence of protein complexes/aggregates which have a size greater than casein miscelles and which are identifiable by confocal microscopy. The protein particle aggregates of the milk products of the invention are not seen in known skimmed and/or semi-skimmed milks.
   Also, the particles found in the milk products of the invention have a size similar to that of the fat droplets seen in micrographs of semi-skimmed milk. Hence, the improved sensory properties may be because the protein particles act as a fat mimic/substitute.

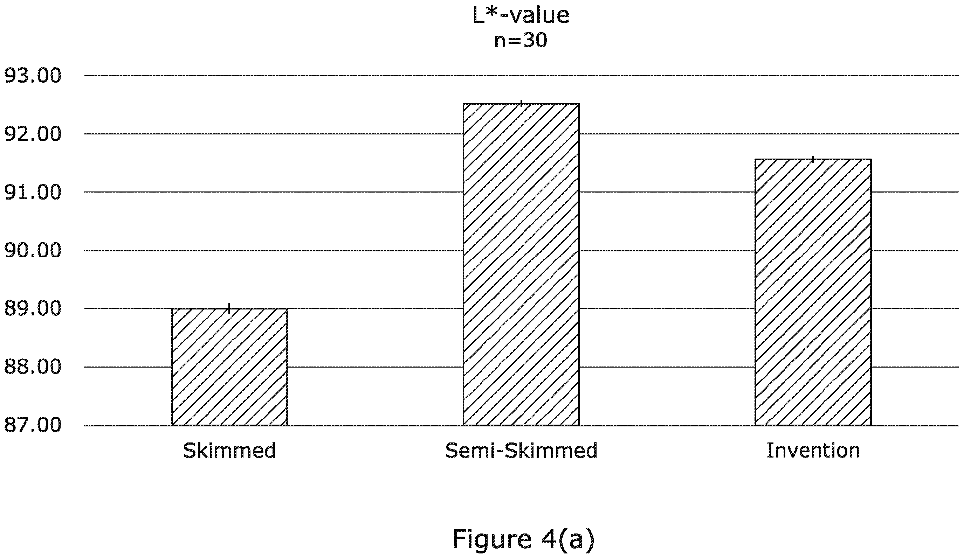

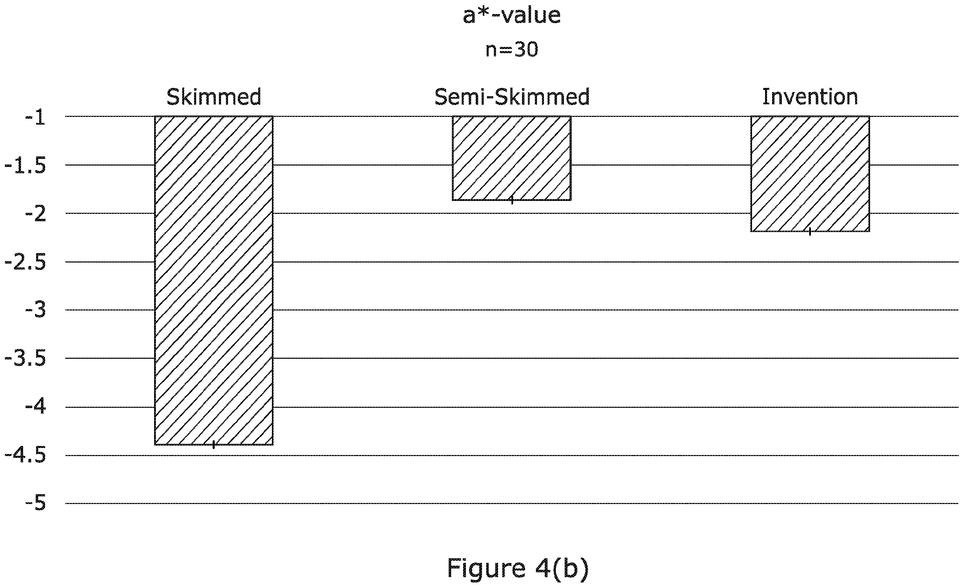

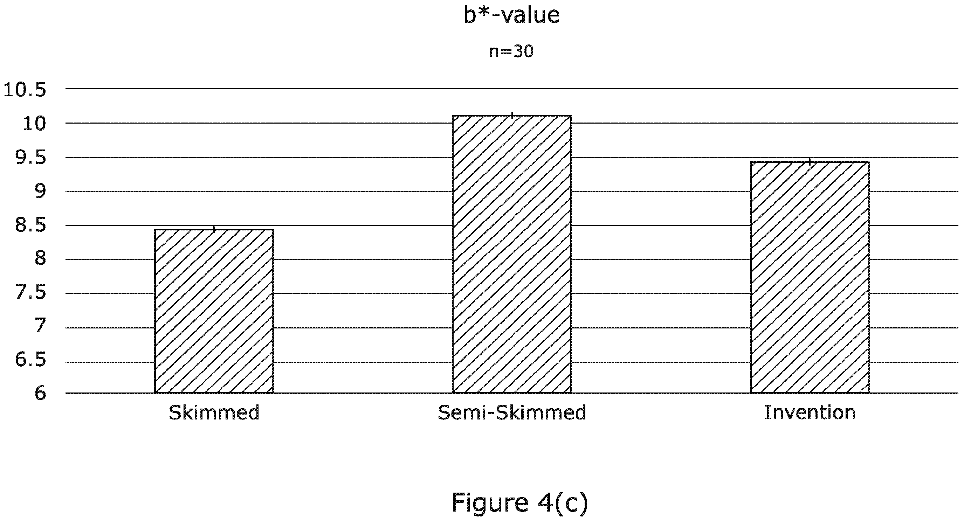

Figs 4(a)-(c) colour measurement comparisons of a protein enriched milk product of the invention compared to known skimmed and semi-skimmed milk products.

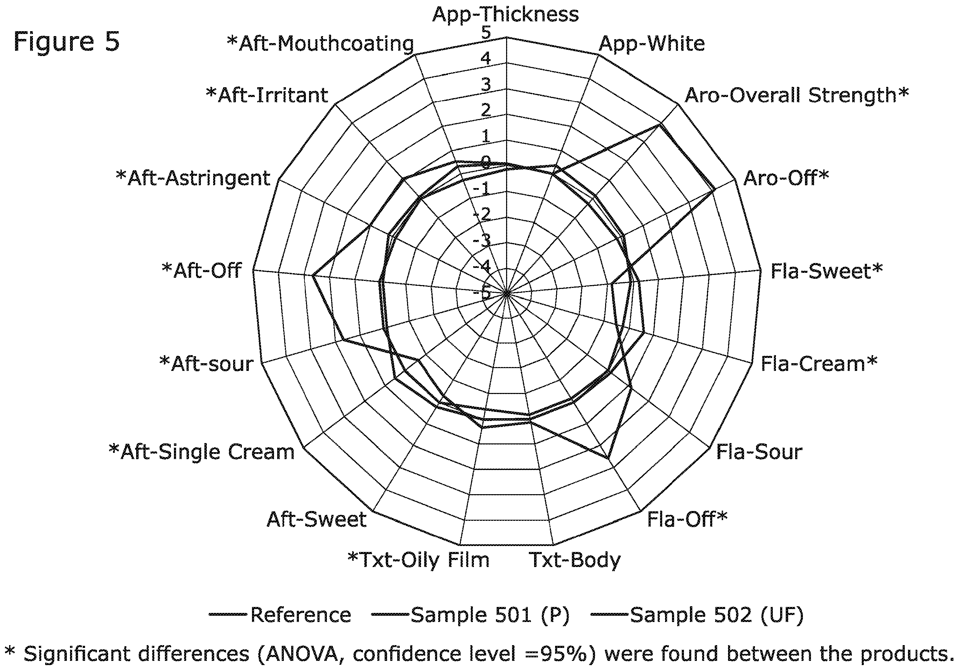

Fig 5 spider diagram results of trained sensory panel assessment of semi-skimmed milk (reference) and ultrafiltered skimmed milk (sample 502) compared to a milk product of the invention (sample 501).

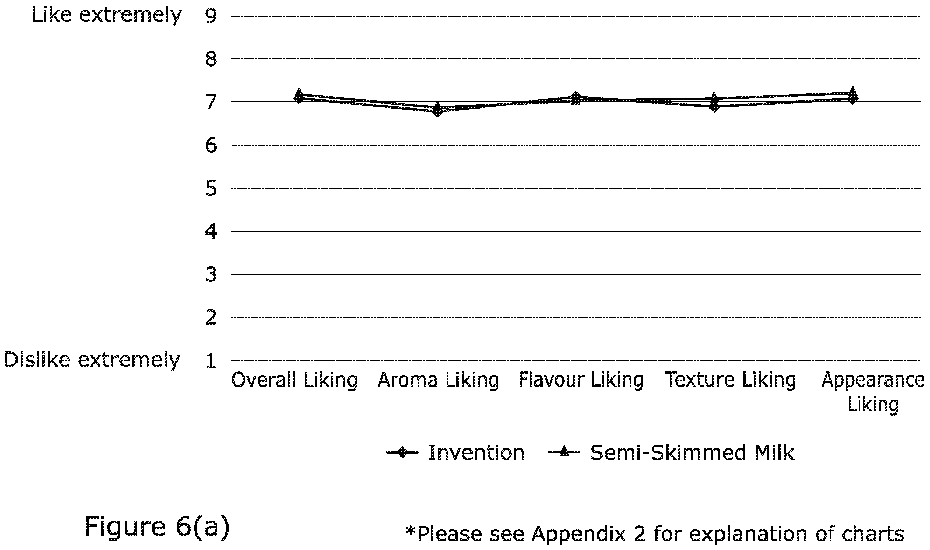

Fig 6(a) consumer testing results summary - "Liking Summary" for comparison of a milk product of the invention compared to known semi-skimmed milk.

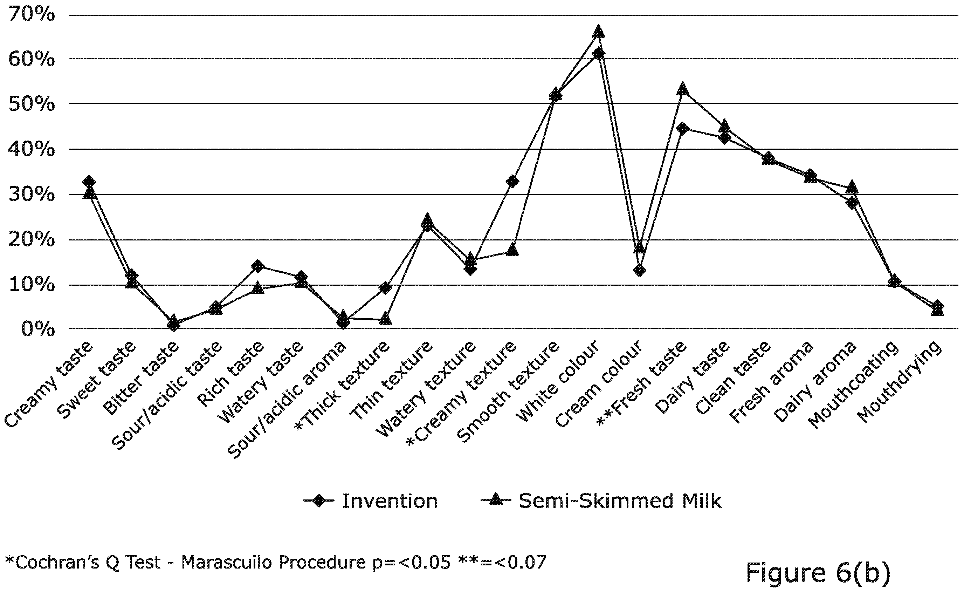

Fig 6(b) consumer testing "check all that apply" results summary comparison for a milk product of the invention compared to a known semi-skimmed milk.

### EXAMPLES

### Example 1: bactofugation of skimmed milk and high heat treatment to obtain milk protein concentrate and mixing with skimmed milk to obtain final protein enriched milk product

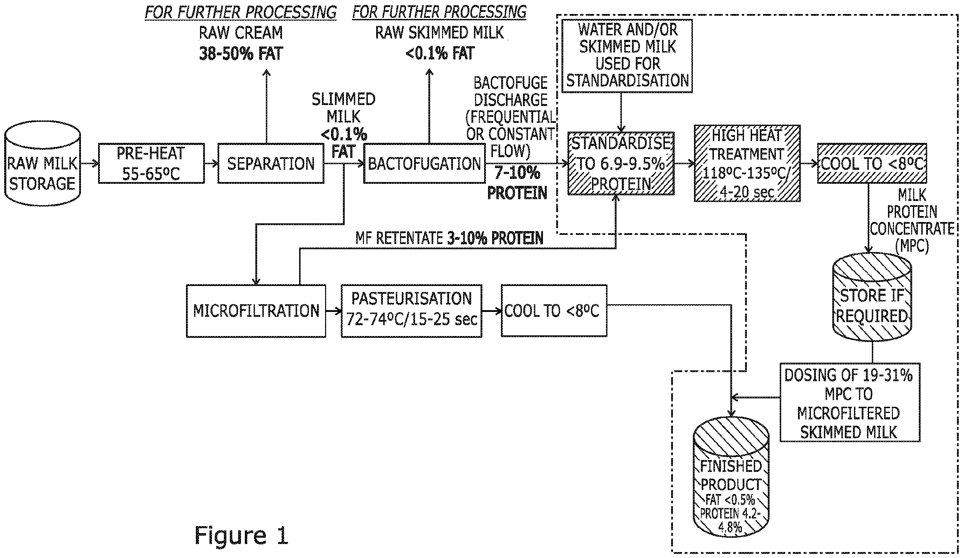

As shown in Fig 1, skimmed milk is obtained by the separation of raw milk into a raw cream fraction and a raw skimmed milk fraction having a fat content of less than 0.1% v/v.

In the process according to the invention, skimmed milk is subjected to centrifugal separation by bactofugation to obtain a microorganism containing fraction, i.e. bactofugate (bactofuge discharge). Supplier of bactofuge: TetraPak UK. Other main supplier of bactofuges is Westfalia Bactofuge model: Tetra Centri BM 618HGV Operating conditions: temperature 50-60°C, 35-40 m3/hrs, discharge frequency every 5 minutes.

Optionally, the bactofugate is treated to standardise its protein content to from approx. 6 to 10% v/v, preferably 6.9 to 9.5% v/v. Standardisation of protein content can be achieved by mixing the bactofugate with water and/or skimmed milk and/or the retentate obtained as a bi-product of the microfiltration of skimmed milk, as shown in Fig 1.

The bactofugate or centrifugate may be filtered through a 50 µm filter before high heat treatment, such as before or after standardisation of protein content where this step is performed. This allows removal of burnt brown particles, which may be created within the separators and bactofuges after prolonged running. Suitably, a static 50 µm tube filter may be used, as described in TetraPak's online dairy processing handbook, chapter 5: "Collection and reception of milk": http://www.dairyprocessinghandbook.com/chapter/collection-and-reception-milk.

The bactofugate is then subjected to high heat treatment above 100°C, eg 118°C to 135°C for 4-20 secs before cooling (preferably 8°C or less), to obtain a milk protein concentrate (MPC). Supplier of heating system: TetraPak UK. Other main supplier of dairy heating systems: GEA, SPX, Krones Heating systems: dual tubular indirect heating and cooling, variable flow speed 400-1, 800 Itr/hr, preheat 80-90°C/1 minute (protein stabilisation), followed by high heat to 120-130°C for 8-30 seconds, cooling to <5°C.

If desired, the protein content of the MPC may be standardised down from approx. 15% v/v to 7 to 9% v/v before mixing with skimmed milk to make the final milk product.

The skimmed milk which is mixed with the MPC is preferably microfiltered and/or pasteurised so that the final milk product has a shelf-life that is extended as compared to the shelf-life of the product made with skimmed milk that has not been subjected to microfiltration and/or pasteurisation. A preferred milk product of the invention has a shelf-life of at least 28 days when stored in unopened packaging at temperatures below 8°C.

In the preferred process shown in Fig 1 the final product has a protein content of from 4.2% v/v to 4.5% v/v. This may be accomplished by mixing the skimmed milk and MPC (having a protein content of from 7 to 9% v/v) in a ratio of 70-80% v/v skimmed milk to 30-20% v/v MPC.

The final milk product preferably has a fat content of less than 0.5% v/v.

The milk product of the invention is preferably packaged into a container, such as a plastic bottle, in a fixed amount such as one pint (568 ml) or multiple thereof.

As shown in the following examples and accompanying figures, use of MPC obtainable by the processes of the invention in a dairy product, such as milk, leads to unexpectedly improved sensory properties. For example, when the MPC is mixed with skimmed milk the resulting product has sensory properties similar to those of a known semi-skimmed milk. This is particularly advantageous because the milk product of the invention also provides the combined benefits not only of a much lower fat content than semi-skimmed milk (<0.5% v/v versus 1.5% v/v), but also of an increased protein content as compared to known semi-skimmed milk (eg 4.2-4.5% v/v versus 3-3.5% v/v).

Without wishing to be bound by theory, the inventors believe that the improved sensory properties obtained by use of MPC may be due to the nature of the protein particles in the MPC and/or milk product. In particular, it appears that protein particle aggregates identifiable by confocal microscopy in the preferred milk product which are not seen in equivalent skimmed or semi-skimmed milk products can mimic one or more of the sensory properties exhibited by products which contain fat droplets.

Hence, in another aspect, the invention provides milk products containing the above protein particle aggregates and uses of the MPC as a fat mimic in a dairy food product, such as a milk, cream, cheese, etc.

### Example 2: Identification of protein particle aggregates using protein composition of the milk product of the invention

### 2.1: Identification of protein particle aggregates using Confocal Laser Scanning Microscopy

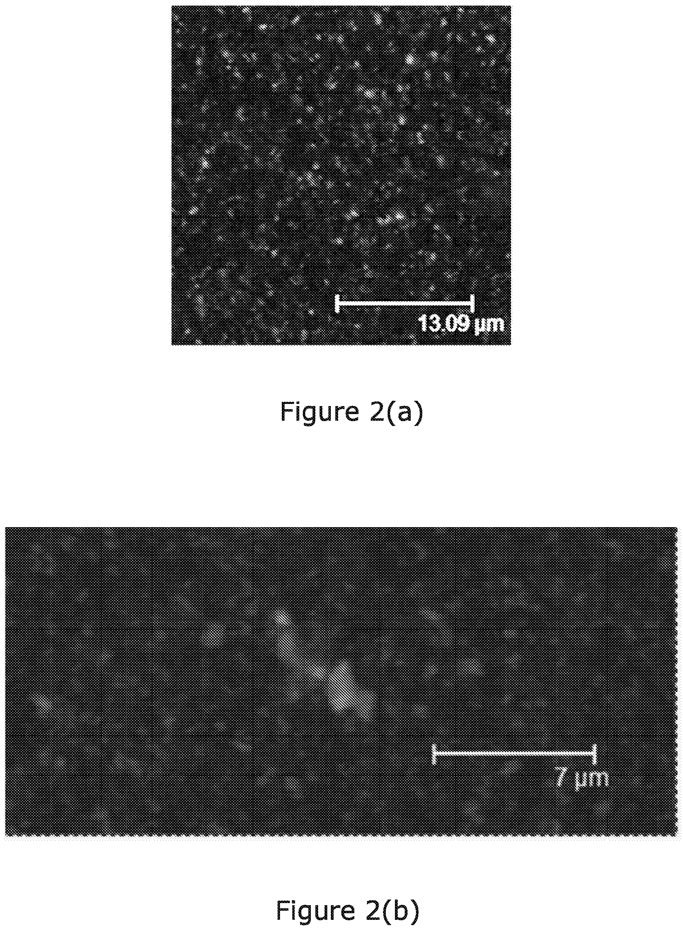

Representative images of casein protein aggregates are shown in Figure 2.

The milk samples were subjected to imaging by confocal laser scanning microscopy (CLSM). Nile red and Fluorescein isothiocyanate (FITC) were used as the fluorescence stain agents for fats and proteins, respectively. Nile red and FITC were dissolved in acetone, and a suitable amount of the dye solutions were placed on a glass slide, allowing the solvents to evaporate before adding the milk sample. CLSM was performed on a Leica TCS SP II (Leica Microsystems GmbH, Heidelberg, Germany) inverted vertically, at room temperature with a 100x oil immersion objective.

### Example 2.2: protein particle size distribution in the milk product of the invention

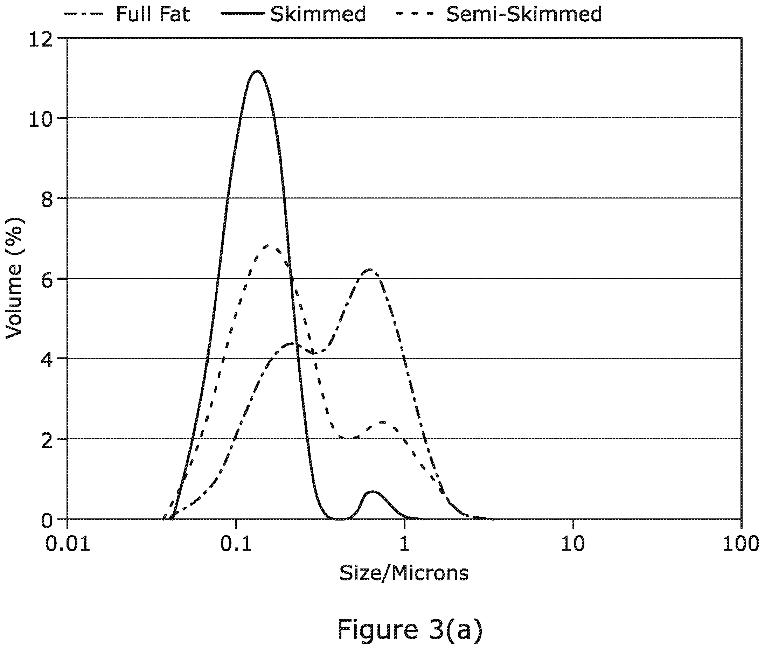

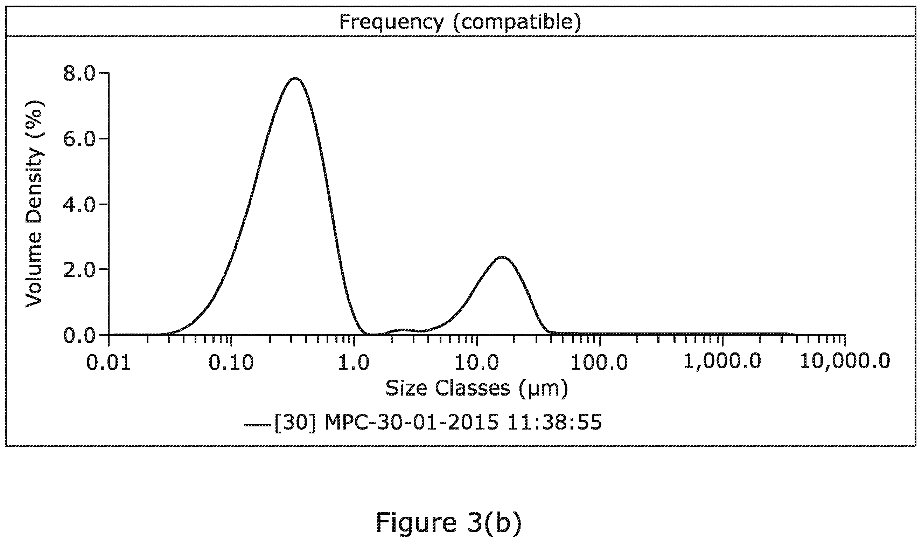

Particle size distributions for whole, semi-skimmed and skimmed milk are shown in Figure 3(a). Particle size distribution for a milk product of the invention is shown in Figure 3(b).

Particle size distributions were determined using a Malvern MasterSizer 3000 (Malvern Instruments Ltd, Malvern, Worcestershire, UK), with the refractive index of proteins (1.458), and that of the dispersion medium (water) (1.33), and the absorbance of proteins was assumed to be 0.001. The size of the larger particles (above 1 micrometer) was determined by applying a cut-off at 1 micrometer ensuring that the measurement was not influenced by the smaller fat and protein particles present in the sample. In order to determine the size of the smaller protein aggregates (below 1 micrometer) samples were centrifuged at 2000g at 4°C for 20 minutes prior to the particle size measurement in order to remove fat droplets, which would otherwise interfere with the measurement in this size range.

### 2.3: Protein Composition (TP) - ratio of casein to whey protein and comparison with known (Cravendale^{®}) extended shelf-life skimmed and semi-skimmed milk products (Cravendale^{®})

The protein in the samples was dissolved in a reduction buffer by reduction of disulphide bonds (S-S) using DTE and extraction of hydrophobic bonds with urea. After dissolving, centrifugation was applied to separate the supernatant from the pellet and the fat fraction. The supernatant was analyzed by LC-TOF using a rpC18 column to separate the caseins and whey proteins (WPs). The method is used for identification and comparison of the caseins and WPs in samples.

Samples were analysed using a method for determination of total protein composition in milk (TP).

200 µl of sample was taken out in an eppendorf tube. 1 ml of reduction buffer (100 mM Na₃-citrate; 6 M Urea) and 20 µl of 1 M DTE was added. Samples were mixed and incubated for 60 min at 30°C. After incubation, the samples are centrifuged at 10,000 rpm, 5°C in 10 min. 200 µl of the supernatant was transferred to a vial and analysed using LC-TOF.

**Table 1: Method settings for Protein Composition (TP) on LC-TOF**

| | |
|---|---|
| System | Agilent Technologies 1290 |
| Method | 151001 poroshell TP.m |
| Column | Poroshell 120 SB-C18 2.1x5mm 2.7 Micron + Guard Column (Agilent) |
| Column Temperature | 40° |
| Mobil phase A | 0.1% TFA in water |
| Mobil phase B | 0.1% TFA in MeCN |
| Gradient | BioSuite: 33.2 - 44.3 % B from 2.8 min - 16.0 min |
| | Poroshell: 34- 45,5 % B from 2.0 min - 18.0 min |
| Flow | 0.35 ml/min |
| Injection volume | 5 µl |
| Wavelength | 214 nm |
| TOF-Settings | Not in use for these samples |

### Results

There is a clear difference in the casein (CN)/whey protein (WP) ratio in the protein enriched milk product of the invention compared to the skimmed and semi-skimmed Cravendale. The protein enriched milk product of the invention has a higher CN/WP ratio, caused by a higher casein level and partly a lower WP level. The protein enriched milk product of the invention shows an average of 9.4 (αs1-casein + β-casein)/WP compared to known extended shelf-life milk products, i.e. semi-skimmed Cravendale's 5.8 and skimmed Cravendale's 5.6.

### Example 3: improved sensory properties of the milk product of the invention compared to known milk products

### Example 3.1: colour comparisons of the milk product of the invention with known skimmed milk and semi-skimmed milk products (Cravendale^{®}) extended shelf-life

A tristimulus spectroscopy color measurement was performed by the use of Minolta CM-5 (Konica Minolta Sensing Europe B.V.) using diffuse illumination 8° (Conforms to CIE No. 15, ISO 7724/1, ASTM E 1164, DIN 5033 Teil 7, and JIS Z 8722 (Condition c)) and 180°viewing (diffuse illumination). The measurements were performed at a sample temperature of 5°C in a petri dish placed at the top-portal of the instrument.

The L*a*b* colour space (also referred to as the CIELAB space) is one of the uniform colour spaces defined by the International Commission on Illumination (CIE) in 1976 and was used to quantitatively report lightness and hue (ISO 11664-4:2008(E)/CIE S 014-4/E:2007). In this space, L* indicates lightness (value from 0-100) and a* and b* indicate colour directions: +a* is the red direction (max value 60), -a* is the green direction (min value -60); +b* is the yellow direction (max value 60), and -b* is the blue direction (min value -60).

### Colour Measurement Results: Table 2 and Figs 4(a)-(c)

| | L*-value | | a*-value | | b*-value | |
|---|---|---|---|---|---|---|
| N = 30 | Mean | Std.dev. | Mean | Std.dev. | Mean | Std.dev. |
| Skimmed | 89.02 | 0.24 | -4.39 | 0.11 | 8.42 | 0.08 |
| Semi-skimmed | 91.03 | 0.08 | -1.87 | 0.02 | 10.10 | 0.12 |
| Invention | 91.56 | 0.13 | -2.18 | 0.08 | 9.40 | 0.15 |

It can be seen from Figs 4(a)-(c) that the milk product of the invention has a colour which is more like that of semi-skimmed milk than skimmed milk.

In particular, skimmed milk is the least white and semi-skimmed the most white, with the product of the invention in between, but more like the whiteness of semi-skimmed. Skimmed milk is the most greenish in colour and semi-skimmed the least greenish, with the product of the invention in between, but more like the greenish colour measurement of semi-skimmed milk.

Similarly, skimmed milk is the least yellowish in colour and semi-skimmed milk the most, with the product of the invention in between, but having a yellow colour measurement more like semi-skimmed milk.

### Example 3.2 and 3.3: sensory panel and domestic use assessment of the milk product of the invention with known skimmed milk and semi-skimmed milk

A preferred milk product obtained by a process as described in Example 1 was compared in comparative taste tests with a known semi-skimmed milk, namely semi-skimmed milk Cravendale^{®}, i.e. microfiltered. Both products were used by 208 consumers, who were regular users of semi-skimmed milk, in a wide range of domestic uses, including cooking/baking (7%); addition to tea (27%), coffee (21%), other hot beverages (~5%); with cereals (26%); on its own (13%); and other uses (~2%), such as protein shakes, milkshakes and custard over a period of five days each.

The consumers completed a questionnaire in their homes and the results are shown in Figs 5, 6(a) and 6(b). In Figure 5, sensory properties were scored for intensity against the reference sample (i.e. semi-skimmed). 0 indicates no difference; differences of very little, little, medium, strong or extremely are scored as 1, 2, 3, 4 or 5 respectively, with a positive sign indicating a greater intensity compared to control and a negative score indicating lower intensity compared to control. One can see that the milk product obtained as in Example 1 has a similar score to the reference milk in all properties. In contrast, a product (UF) made by ultrafiltering skimmed milk to 5% protein and treating at 125 °C for 8s resulted in a high intensity of off aroma, flavour and after-taste. One can see in Figure 6(a) that the milk product of the invention and known semi-skimmed milk scored similarly in a nine point hedonic scale (dislike extremely - like extremely) of key sensory properties: aroma, flavours, texture and appearance.

One can see from Fig 5, 6(a) and 6(b) (check all that apply questionnaire results) that the milk product of Example 1 exhibited many similar sensory properties to the known semi-skimmed milk.

### Example 4: commercial production

Five full-scale production tests were performed essentially as described in Example 1 and illustrated in Figure 1. Bactofugate contained 6.5 to 20 v/v% protein in different runs and was standardised to 6.5 to 9.5 v/v% protein. Retentate from the microfiltration of skimmed milk, if added to the bactofugate, had a protein content of 3 to 12 v/v%. The bactofugate was filtered through a 50 µm filter prior to high heat treatment. As a precaution because the milk protein concentrate tank was not aseptic, the milk protein concentrate was subjected to pasteurisation at 76 °C for 15s prior to addition to the skimmed milk.

The finished product included skimmed microfiltered, homogenised milk to which a small quantity of high heat treated cream had been added, together with milk protein concentrate dosed at 19-31 v/v%. Fat content of the finished product (from the added cream) was less than 0.5 v/v% and protein content was 4.5 v/v%.

Shelf life of minimum 28 days upon storage at <8 °C was proven for each of the five trial production runs, with products meeting the following criteria at 28 days: total viable count <100 cfu/ml; Enterobacteriaceae <1 cfu/ml; *Escherichia coli* <1 cfu/ml; *Bacillus cereus* <2 cfu/ml; *Staphylococcus aureus* <2 cfu/ml; Salmonella not detected in 2g; Listeria not detected in 25g.

Hence, the above examples show that the processes and protein enriched milk products of the invention exhibit surprising and desirable sensory and nutritional properties.

## Claims

1. A process for making a milk product having a protein content higher than 3.5% v/v comprising:
(i) providing skimmed milk from the separation of raw milk;
(ii) subjecting the skimmed milk to centrifugal separation to obtain centrifugate which contains micro-organisms;
(iii) subjecting the centrifugate to heat treatment above 100° centigrade, and cooling to obtain a milk protein concentrate;
(iv) providing skimmed milk; and
(v) mixing the milk protein concentrate with the skimmed milk to obtain a milk product having a protein content higher than 3.5% v/v.

2. A process as claimed in Claim 1 wherein the protein content of the centrifugate is standardised before high heat treatment to from 6 to 10 v/v%, preferably from 6.9 to 9.5v/v%; and/or wherein the milk protein concentrate and skimmed milk are mixed to obtain a protein supplemented milk preparation having a protein content of from 4 to 5 v/v %, and preferably 4.2 to 4.8 v/v %.

3. A process as claimed in any preceding claim wherein the milk product has a fat content of less than 0.5 v/v%; and/or wherein the milk protein concentrate comprises from 15 to 35 v/v%, preferably 20 v/v% of the milk product.

4. A process as claimed in any preceding claim wherein the high heat treatment involves heating from 118° centigrade to 135° centigrade for 4 to 20 seconds.

5. A process as claimed in any preceding claim wherein the milk protein concentrate is cooled to less than 8° centigrade before mixing with the skimmed milk.

6. A process as claimed in any preceding claim wherein the skimmed milk in step (iv) is microfiltered and/or pasteurised before mixing with the milk protein concentrate.

7. A process as claimed in any of Claims 1 to 6 further comprising a packaging step wherein a fixed amount of the milk product is packaged into a container, optionally wherein the container is a bottle or carton.

8. A milk product having a protein content higher than 3.5% v/v obtainable by a process as claimed in any of Claims 1 to 7, wherein:
a) the product has a greater casein : whey protein ratio than skimmed milk and/or semi-skimmed milk; optionally wherein the casein : whey protein ratio of the milk product is approx. 9 and preferably 9.4; optionally wherein the casein : whey protein ratio refers to the ratio of (αs1-casein + β-casein) : whey protein; and/or
b) the milk product comprises protein particle aggregates identifiable by confocal microscopy using Fluorescein isothiocyanate as a protein staining agent, which aggregates are absent from skimmed and/or semi-skimmed milk, optionally wherein the protein particle aggregates identifiable by confocal microscopy have an average particle diameter of 0.5 micrometer or more, preferably 0.5 to 2 micrometers, and most preferably approx. 1 micrometer.

9. The milk product according to Claim 8, wherein the milk product has one or more sensory properties which is more similar to semi-skimmed milk than skimmed milk; wherein the sensory properties are selected from one or more of aroma; flavour; texture (mouthfeel); after-taste; after-feel; and colour, as determined by tristimulus spectroscopy colour measurement.

10. A milk product as defined in Claim 8 or 9 and packaged so that a fixed amount of the milk product is packaged in a container, optionally wherein the container is a bottle or carton.

11. A process as claimed in Claim 7 or a milk product as claimed in Claim 10 wherein the fixed amount is one pint (568 ml) or a multiple thereof.

12. Use of a milk protein concentrate (a): as an ingredient in a dairy food or drink product to improve one or more sensory properties of the dairy product, optionally wherein the sensory property is selected from one or more of aroma, flavour, texture (mouthfeel), after-taste, after-feel, and colour, optionally wherein the dairy food or drink product is selected from milk, cream, or cheese; or (b) as an ingredient in a food or drink product to mimic one or more sensory properties of a fat;
wherein the milk protein concentrate is obtainable by a process involving the centrifugal separation of skimmed milk from the separation of raw milk to obtain a centrifugate containing micro-organisms; and subjecting the centrifugate to heat treatment above 100° centigrade, and cooling to obtain the milk protein concentrate, wherein the cooling is cooling to less than 8° C.

## Patentansprüche

1. Verfahren zur Herstellung eines Milchprodukts mit einem Proteingehalt von mehr als 3,5 Vol.-%, umfassend:
(i) Bereitstellen von Magermilch durch Trennung von Rohmilch;
(ii) Unterziehen der Magermilch einer Zentrifugentrennung, um ein Zentrifugat zu erhalten, das Mikroorganismen enthält;
(iii) Aussetzen des Zentrifugats gegenüber einer Wärmebehandlung über 100 °C und Abkühlen, um ein Milchproteinkonzentrat zu erhalten;
(iv) Bereitstellen von Magermilch; und
(v) Mischen des Milchproteinkonzentrats mit der Magermilch, um ein Milchprodukt mit einem Proteingehalt von mehr als 3,5 Vol.-% zu erhalten.

2. Verfahren nach Anspruch 1, wobei der Proteingehalt des Zentrifugats vor der Behandlung mit hoher Hitze auf 6 bis 10 Vol.-%, vorzugsweise 6,9 bis 9,5 Vol.-% standardisiert wird; und/oder wobei das Milchproteinkonzentrat und die Magermilch vermischt werden, um ein mit Proteinen angereichertes Milchpräparat mit einem Proteingehalt von 4 bis 5 Vol.-%, vorzugsweise 4,2 bis 4,8 Vol.-% zu erhalten.

3. Verfahren nach einem der vorangegangenen Ansprüche, wobei das Milchprodukt einen Fettgehalt von weniger als 0,5 Vol.-% aufweist; und/oder wobei das Milchproteinkonzentrat 15 bis 35 Vol.-%, vorzugsweise 20 Vol.-% des Milchprodukts umfasst.

4. Verfahren nach einem der vorangegangenen Ansprüche, wobei die Behandlung mit hoher Hitze Erhitzen auf 118 °C bis 135 °C für 4 bis 20 Sekunden umfasst.

5. Verfahren nach einem der vorangegangenen Ansprüche, wobei das Milchproteinkonzentrat auf weniger als 8 °C abgekühlt wird, bevor es mit der Magermilch vermischt wird.

6. Verfahren nach einem der vorangegangenen Ansprüche, wobei die Magermilch in Schritt (iv) vor dem Mischen mit dem Milchproteinkonzentrat mikrofiltriert und/oder pasteurisiert wird.

7. Verfahren nach einem der Ansprüche 1 bis 6, das weiters einen Verpackungsschritt umfasst, bei dem eine festgelegte Menge des Milchprodukts in einem Behälter verpackt wird, wobei der Behälter gegebenenfalls eine Flasche oder ein Karton ist.

8. Milchprodukt mit einem Proteingehalt von mehr als 3,5 Vol.-%, das durch ein Verfahren nach einem der Ansprüche 1 bis 7 erhältlich ist, wobei:
a) das Produkt ein höheres Kasein:Molkenprotein-Verhältnis aufweist als Magermilch und/oder teilentrahmte Milch; wobei das Kasein:Molkenprotein-Verhältnis des Milchprodukts gegebenenfalls etwa 9 und vorzugsweise 9,4 beträgt; wobei sich das Kasein:Molkenprotein-Verhältnis gegebenenfalls auf das Verhältnis (αs1-Kasein + β-Kasein):Molkenprotein bezieht; und/oder
b) wobei das Milchprodukt Partikelaggregate umfasst, die durch Konfokalmikroskopie unter Verwendung von Fluoresceinisothiocyanat als Proteinfärbemittel identifizierbar sind, wobei die Aggregate in Magermilch und/oder teilentrahmter Milch nicht vorhanden sind, wobei gegebenenfalls die Proteinpartikelaggregate, die durch Konfokalmikroskopie identifizierbar sind, einen mittleren Partikeldurchmesser von 0,5 Mikrometer oder mehr, vorzugsweise 0,5 bis 2 Mikrometer, und insbesondere etwa 1 Mikrometer aufweisen.

9. Milchprodukt nach Anspruch 8, wobei das Milchprodukt eine oder mehrere sensorische Eigenschaften aufweist, die teilentrahmter Milch ähnlicher sind als Magermilch; wobei die sensorischen Eigenschaften aus einem oder mehreren aus dem Aroma; dem Geschmack; der Textur (Mundgefühl); dem Nachgeschmack; dem Nachgefühl; und der durch Tristimulus-Spektroskopie-Farbmessung bestimmten Farbe ausgewählt sind.

10. Milchprodukt nach Anspruch 8 oder 9, das so verpackt ist, sodass eine festgelegte Menge des Milchprodukts in einem Behälter verpackt ist, wobei der Behälter gegebenenfalls eine Flasche oder ein Karton ist.

11. Verfahren nach Anspruch 7 oder Milchprodukt nach Anspruch 10, wobei die festgelegte Menge ein Pint (568 ml) oder ein Vielfaches davon ist.

12. Verwendung eines Milchproteinkonzentrats (a): als Bestandteil in einem Molkerei-Lebensmittel- oder -Getränkeprodukt, um eine oder mehrere sensorische Eigenschaften des Molkereiprodukts zu verbessern, wobei die sensorische Eigenschaft gegebenenfalls aus einem oder mehreren aus dem Aroma; dem Geschmack; der Textur (Mundgefühl); dem Nachgeschmack; dem Nachgefühl; und der Farbe ausgewählt ist, wobei das Molkerei-Lebensmittel- oder -Getränkeprodukt aus Milch, Sahne und Käse ausgewählt ist; oder (b) als Bestandteil in einem Lebensmittel- oder Getränkeprodukt zur Nachahmung einer oder mehrerer sensorischer Eigenschaften von Fett;
wobei das Milchproteinkonzentrat durch ein Verfahren, das die Zentrifugentrennung von Magermilch von der Trennung von Rohmilch erhältlich ist, um ein Zentrifugat zu erhalten, das Mikroorganismen enthält; und Unterziehen des Zentrifugats einer Wärmebehandlung über 100 °C und Abkühlen, um das Milchproteinkonzentrat zu erhalten, wobei das Abkühlen ein Abkühlen auf weniger als 8 °C ist, erhältlich ist.

## Revendications

1. Procédé de fabrication d'un produit laitier présentant une teneur en protéines supérieure à 3,5 % en volume/volume comprenant :
(i) la fourniture d'un lait écrémé issu de la séparation d'un lait cru ;
(ii) la soumission du lait écrémé à une séparation par centrifugation pour obtenir un centrifugat qui contient des micro-organismes ;
(iii) la soumission du centrifugat à un traitement thermique au-dessus de 100° centigrades, et à un refroidissement pour obtenir un concentré de protéines de lait ;
(iv) la fourniture d'un lait écrémé ; et
(v) le mélange du concentré de protéines de lait avec le lait écrémé pour obtenir un produit laitier présentant une teneur en protéines supérieure à 3,5 % en volume/volume.

2. Procédé selon la revendication 1 dans lequel la teneur en protéines du centrifugat est standardisée avant un traitement thermique à haute température à 6 à 10 % en volume/volume, de préférence à 6,9 à 9,5 % en volume/volume ; et/ou dans lequel le concentré de protéines de lait et le lait écrémé sont mélangés pour obtenir une préparation lactée enrichie en protéines présentant une teneur en protéines de 4 à 5 % en volume/volume, et de préférence de 4,2 à 4,8 % en volume/volume.

3. Procédé selon une quelconque revendication précédente dans lequel le produit laitier présente une teneur en matières grasses inférieure à 0,5 % en volume/volume ; et/ou dans lequel le concentré de protéines de lait comprend de 15 à 35 % en volume/volume, de préférence 20 % en volume/volume du produit laitier.

4. Procédé selon une quelconque revendication précédente dans lequel le traitement thermique à haute température implique un chauffage de 118° centigrades à 135° centigrades pendant 4 à 20 secondes.

5. Procédé selon une quelconque revendication précédente dans lequel le concentré de protéines de lait est refroidi à moins de 8° centigrades avant son mélange avec le lait écrémé.

6. Procédé selon une quelconque revendication précédente dans lequel le lait écrémé dans l'étape (iv) est microfiltré et/ou pasteurisé avant son mélange avec le concentré de protéines de lait.

7. Procédé selon l'une quelconque des revendications 1 à 6 comprenant en outre une étape de conditionnement dans lequel une quantité fixe du produit laitier est conditionnée dans un récipient, facultativement dans lequel le récipient est une bouteille ou un carton.

8. Produit laitier présentant une teneur en protéines supérieure à 3,5 % en volume/volume pouvant être obtenu par un procédé selon l'une quelconque des revendications 1 à 7, dans lequel :
a) le produit présente un rapport caséine: protéine de lactosérum plus élevé que celui d'un lait écrémé et/ou d'un lait demi-écrémé ; facultativement dans lequel le rapport caséine:protéine de lactosérum du produit laitier est approximativement de 9 et de préférence de 9,4 ; facultativement dans lequel le rapport caséine:protéine de lactosérum fait référence au rapport (caséine αs1 + caséine β) :protéine de lactosérum ; et/ou
b) le produit laitier comprend des agrégats de particules protéiques identifiables par microscopie confocale en utilisant l'isothiocyanate de fluorescéine comme agent de coloration de protéine, lesquels agrégats sont absents d'un lait écrémé et/ou d'un lait demi-écrémé, facultativement dans lequel les agrégats de particules protéiques identifiables par microscopie confocale présentent un diamètre moyen de particule de 0,5 micromètre ou plus, de préférence de 0,5 à 2 micromètres, et de manière préférée entre toutes d'approximativement 1 micromètre.

9. Produit laitier selon la revendication 8, dans lequel le produit laitier présente une ou plusieurs propriétés sensorielles qui ressemblent davantage à celles du lait demi-écrémé qu'à celles du lait écrémé ; dans lequel les propriétés sensorielles sont sélectionnées parmi un ou plusieurs parmi l'arôme ; la saveur ; la texture (sensation en bouche) ; l'arrière-goût ; la sensation après-coup ; et la couleur, telle que déterminée par mesure de couleur par spectroscopie tristimulus.

10. Produit laitier tel que défini dans la revendication 8 ou la revendication 9 et conditionné de telle sorte qu'une quantité fixe du produit laitier est conditionnée dans un récipient, facultativement dans lequel le récipient est une bouteille ou un carton.

11. Procédé selon la revendication 7 ou produit laitier selon la revendication 10 dans lequel la quantité fixe est une pinte (568 ml) ou un multiple de celle-ci.

12. Utilisation d'un concentré de protéines de lait (a) : comme ingrédient dans un produit alimentaire ou buvable à base de lait pour améliorer une ou plusieurs propriétés sensorielles du produit laitier, facultativement dans laquelle la propriété sensorielle est sélectionnée parmi un ou plusieurs parmi l'arôme, la saveur, la texture (sensation en bouche), l'arrière-goût, la sensation après-coup, et la couleur, facultativement dans laquelle le produit alimentaire ou buvable à base de lait est sélectionné parmi le lait, la crème ou le fromage ; ou (b) comme ingrédient dans un produit alimentaire ou buvable pour imiter une ou plusieurs propriétés sensorielles d'une graisse ;
dans laquelle le concentré de protéines de lait peut être obtenu par un procédé impliquant la séparation par centrifugation d'un lait écrémé issu de la séparation d'un lait cru pour obtenir un centrifugat contenant des micro-organismes ; et la soumission du centrifugat à un traitement thermique au-dessus de 100° centigrades, et à un refroidissement pour obtenir le concentré de protéines de lait, dans laquelle le refroidissement est un refroidissement à moins de 8 °C.
